# EUROPEAN PATENT SPECIFICATION

(11) **EP 3 435 681 B1**
(45) Date of publication and mention of the grant of the patent: **02.12.2020**
(21) Application number: 17769828.9
(22) Date of filing: 28.02.2017
(51) Int. Cl.: H04Q 9/00, G06F 3/0488, B60L 53/12

(54) **ELECTRONIC DEVICE, MANIPULATION METHOD FOR OBJECT SYSTEM, AND MANIPULATION PROGRAM**
ELEKTRONISCHE VORRICHTUNG, MANIPULATIONSVERFAHREN FÜR EIN OBJEKTSYSTEM UND MANIPULATIONSPROGRAMM
DISPOSITIF ÉLECTRONIQUE, PROCÉDÉ DE MANIPULATION DE SYSTÈME OBJET, ET PROGRAMME DE MANIPULATION

(30) Priority: 24.03.2016 JP 2016060500
(43) Date of publication of application: 30.01.2019
(73) Proprietor: IHI Corporation, Tokyo 135-8710 (JP)
(72) Inventor: ASANO, Atsushi, Tokyo 135-8710 (JP); ARAKI, Jun, Tokyo 135-8710 (JP)
(74) Representative: O'Connor, Dominic David
(86) International application number: PCT/JP2017/007770
(87) International publication number: WO 2017/163783

(56) References cited:
- JP-A- 2001 022 492
- JP-A- 2005 284 404
- JP-A- 2010 187 452
- US-A1- 2014 021 908
- US-A1- 2014 081 481
- US-A1- 2015 224 888

## Description

### Technical Field

An aspect of the present disclosure relates to an electronic device, a method, and a program for operating another system.

### Background Art

Technology for operating an electronic device via a touch panel mounted on the electronic device is known. In this technology, there is a mechanism for making operation on the touch panel different in accordance with a function to be executed so as to prevent unintentional operation as much as possible. For example, a volume setting icon for changing a volume with a touch pen is described in the following Patent Literature 1 (FIGS. 75 and 76). When the touch pen has touched a low volume region of the volume setting icon, a slider instantaneously moves to a touch-on position and a volume instantaneously decreases. On the other hand, when the touch pen performs a touch-on operation in a high volume region of the volume setting icon, the slider does not move to the touch-on position and the volume does not increase. In order to increase the volume, it is necessary for a user to move the touch pen while causing the touch pen to touch within a slider display range. Attention is also drawn to the disclosure of US2014021908 A1, which relates to a mobile application for charging an electric vehicle in a wireless charging station.

### Citation List

### Patent Literature

[Patent Literature 1] JP 2013-093039 A

### Summary of Invention

### Technical Problem

The technology described in Patent Literature 1 is to control functions of an electronic device itself having a touch panel. In technology for using an electronic device having a touch panel to operate a system different from the electronic device, a mechanism for preventing erroneous operation on the electronic device is desired.

### Solution to Problem

According to a first aspect of the present invention, an electronic device having a touch panel is provided as claimed in claims 1 and 2.

### Advantageous Effects of Invention

According to an aspect of the present disclosure, it is possible to prevent erroneous operation on an electronic device for operating another system.

### Brief Description of Drawings

FIG. 1 is a diagram schematically illustrating an example of application of a mobile terminal according to an embodiment.
FIG. 2 is a diagram illustrating a hardware configuration of the mobile terminal according to the embodiment.
FIG. 3 is a diagram illustrating a functional configuration of a mobile terminal according to the embodiment.
FIG. 4 is a diagram illustrating an example of outputs of a start signal and a stop signal.
FIG. 5 is a diagram illustrating an example of an interface of the mobile terminal.
FIG. 6 is a diagram illustrating an example of outputs of the start signal and the stop signal corresponding to FIG. 5.
FIG. 7 is a flowchart illustrating still another example of the output of the start signal.
FIG. 8 is a flowchart illustrating still another example of the output of the start signal.
FIG. 9 is a diagram illustrating an example of an interface of the mobile terminal corresponding to FIG. 8.
FIG. 10 is a flowchart illustrating still another example of the output of the start signal.
FIG. 11 is a diagram illustrating an example of an interface of the mobile terminal corresponding to FIG. 10.
FIG. 12 is a flowchart illustrating an example of the output of the stop signal.
FIG. 13 is a diagram illustrating a configuration of an operation program according to the embodiment.

### Description of Embodiments

As described above, an electronic device according to the first aspect of the present invention is an electronic device having a touch panel as claimed in claims 1 and 2.

A method for operating a target system according to another aspect of the present invention is a method as claimed in claims 6 and 8.

An operation program according to another aspect of the present invention is an operation program as claimed in claims 7 and 9.

In the electronic device according to the first aspect, the instruction unit measures the signal intensity of the wireless communication with the target system in accordance with the end of the operation and transmits the instruction signal if the signal intensity is less than or equal to the predetermined threshold. The fact that the signal intensity is less than or equal to the predetermined threshold means that the electronic device (the user) is a predetermined distance or more away from the target system. According to this mechanism, it is possible to operate the target system after the user is moved away from the target system.

An electronic device having a touch panel according to another aspect of the present invention is provided as claimed in claim 2. In this aspect, the instruction unit acquires an image related to the target system from a camera in accordance with an end of the operation, compares the image with a predetermined pattern, and transmit the instruction signal after a comparison result satisfies a predetermined condition. According to this mechanism, it is possible to cause the target system to be operated only under a specific condition.

In the electronic device according to another aspect, the electronic device may further comprise the camera, and the camera may be an external camera, and the instruction unit may transmit the instruction signal in response to acquisition of the image from the external camera. By intentionally acquiring an image from an external camera different from the electronic device, it is possible to gain time in which the start of actuation can be canceled.

In the electronic device according to another aspect, the target system may be a wireless power transfer system including a power transmitter capable of wirelessly transmitting power to a power receiver of a movable object. In this case, it is possible to prevent erroneous operation of the electronic device for operating the wireless power transfer system.

Hereinafter, embodiments of the present disclosure will be described in detail with reference to the accompanying drawings. In the description of the drawings, the same or equivalent elements are denoted by the same reference signs, and redundant description thereof will be omitted.

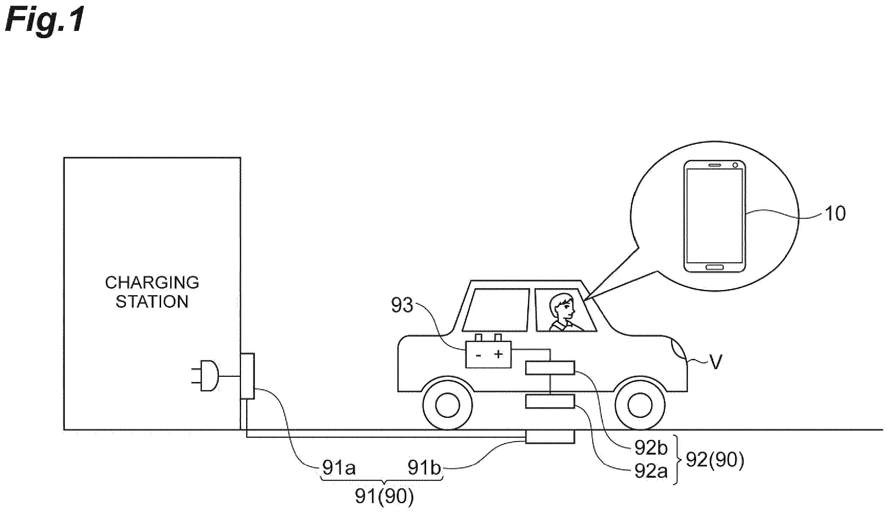

A function and configuration of an electronic device according to an embodiment will be described with reference to FIGS. 1 to 3. The electronic device is a device for operating the target system. Examples of the electronic device include a mobile terminal such as a smartphone (a high-performance mobile phone), a portable information terminal (PDA), a tablet, a car navigation system, and a portable or stationary personal computer. However, types of electronic devices are not limited thereto. In the present embodiment, a mobile terminal 10 is shown as an example of the electronic device.

The target system is a device, an apparatus, or a computer system different from the electronic device (in other words, the target system is independent of the electronic device). The target system has a function of receiving a signal from the electronic device and performing an operation in accordance with the signal. The target system may operate in accordance with an instruction from its own input device without requiring a signal from the electronic device.

In the present embodiment, a wireless power transfer system 90 is shown as an example of a target system. The wireless power transfer system 90 includes a power transmitter 91 and a power receiver 92, and is a system for wirelessly supplying power from the power transmitter 91 to the power receiver 92 by using magnetic coupling between coils such as a magnetic-field resonance method or an electromagnetic induction method. The power transmitter 91 includes a transmission power conversion device (for example, a rectification circuit, a DC/DC converter, an inverter circuit, or the like) 91a and a power transmission coil device 91b. The power transmitter 91 is installed in, for example, a charging station. The power receiver 92 includes a power receiving coil device 92a and a received power converting device (for example, a rectification circuit, a DC/DC converter, or the like) 92b, and is mounted on a movable object V. Power transmitted to the power receiver 92 is stored in a battery 93 of the movable object V. Both the power transmitter 91 and the power receiver 92 have hardware elements such as a processor, a memory, an input/output interface, a communication interface, and the like. A method of wirelessly transmitting power is not limited to a magnetic-field resonance method and an electromagnetic induction method, and other methods such as an electric-field coupling method and a radio wave method may be used.

The movable object is a device configured to transport a human or an object from one place to another. In the present embodiment, a vehicle with a battery is shown as an example of the movable object, but a type of movable object is not limited at all. For example, the movable object may be a motorcycle, a bicycle, a train, a waterborne vessel, an underwater vehicle, or an airplane. Therefore, a route along which the movable object travels may be a land route, a water route, or an air route.

In the electronic device, an application program (hereinafter referred to as a "operation application") having a function of operating the target system is pre-installed. The operation application installed in the mobile terminal 10 can instruct the wireless power transfer system 90 to start or stop charging the battery 93 of the movable object V. The mobile terminal 10 transmits a predetermined instruction signal to the power transmitter 91 via a communication network such as a wireless LAN, and the power transmitter 91 operates in accordance with the instruction signal. According to this mechanism, the user can operate the wireless power transfer system 90 by operating the mobile terminal 10, and, more specifically, the user can start or stop charging the battery 93 of the movable object V.

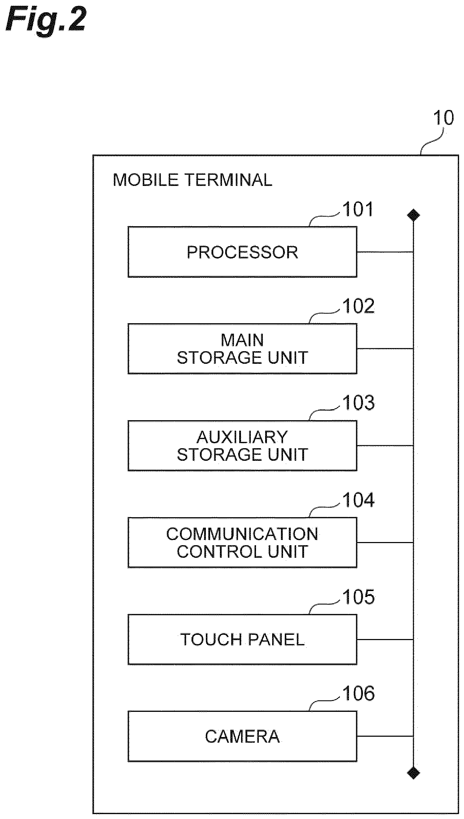

FIG. 2 illustrates a general hardware configuration of the mobile terminal 10. The mobile terminal 10 includes a processor 101, a main storage unit 102, an auxiliary storage unit 103, a communication control unit 104, a touch panel 105, and a camera 106. The processor 101 is an electronic component configured to run an operating system and an application program. The main storage unit 102 is an electronic component configured to temporarily store a program to be executed and data, and includes, for example, a ROM and a RAM. The auxiliary storage unit 103 is an electronic component configured to permanently store data to be processed or processed data, and includes, for example, a storage device such as a hard disk or a flash memory. The communication control unit 104 is an electronic component configured to transmit and receive data to and from other devices in a wired or wireless manner, and includes, for example, a network card or a wireless communication module. The touch panel 105 is an electronic component configured to display data or information and receive an input from the user with physical contact. That is, the touch panel 105 performs functions of both an input device and an output device. The camera 106 is an electronic component configured to record an image (a still image or a moving image) of its own surrounding environment.

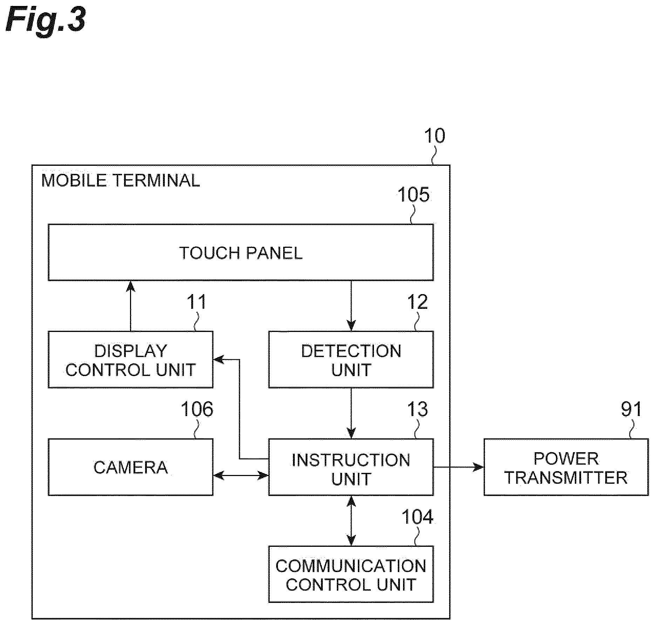

FIG. 3 illustrates a functional configuration of the mobile terminal 10. The mobile terminal 10 includes a display control unit 11, a detection unit 12, and an instruction unit 13 as functional components. These functional elements are implemented by causing predetermined software (an operation program PI to be described below) to be loaded on the processor 101 or the main storage unit 102 to execute the software. The processor 101 operates the communication control unit 104, the touch panel 105, or the camera 106 in accordance with the software, and reads and writes data in the main storage unit 102 or the auxiliary storage unit 103. Data or a database necessary for processing is stored in the main storage unit 102 or the auxiliary storage unit 103.

The display control unit 11 is a functional element configured to display a user interface necessary for operating the wireless power transfer system 90 on the touch panel 105. The user interface is a mechanism for exchanging information between the mobile terminal 10 and the user. In the present embodiment, the user interface is a visible figure or characters for receiving a user input for operating the mobile terminal 10. The user interface is represented by, for example, buttons or icons, but a specific representation method of the user interface is not limited at all. The display control unit 11 displays the user interface on the touch panel 105. The user can input an instruction to the mobile terminal 10 by performing predetermined operation such as tapping or flicking on the displayed user interface.

The display control unit 11 can cause at least a first user interface related to the start of actuation (a first function) of the wireless power transfer system 90 (the target system) and a second user interface related to a function of the target system other than the start of actuation (a second function different from the first function) to be displayed on the touch panel. The "start of actuation of the target system" means the transition of the target system from a stopped state to a running state so as to exhibit the function of the target system (for example, power feeding). The "first user interface for the start of actuation" is a user interface necessary to exhibit a function to be operated. In the present embodiment, as an example of the first user interface, an icon for activating the operation application (an activation icon) and a button for actuating the wireless power transfer system 90 (a charging start button) are shown. The "other function" corresponding to the second user interface is not limited as long as the other function is a function of the target system other than the start of actuation. In the present embodiment, as an example of the second user interface, a button for stopping charging by the wireless power transfer system 90 (a charging stop button) is shown.

Both the charging start button and the charging stop button are displayed on the touch panel 105 after the operation application is activated according to operation of the activation icon. Timings at which the charging start button and the charging stop button are displayed are not limited. For example, the display control unit 11 may first cause the charging start button to be displayed on the touch panel 105 without displaying the charging stop button, and switch the display from the charging start button to the charging stop button after the charging start button is operated. Alternatively, the display control unit 11 may simultaneously display these two buttons on the touch panel 105.

When the user operates the activation icon to cause the operation application to be activated, the display control unit 11 displays at least the charging start button on the touch panel 105. Thereafter, the display control unit 11 executes the subsequent screen control in accordance with the user's operation of the charging start button or control within the mobile terminal 10 according to the operation. Although examples of the subsequent screen control include additional display for actually starting charging, control of the charging start button, or control of the charging stop button, the present disclosure is not limited thereto.

The detection unit 12 is a functional element configured to detect the user's operation of the user interface displayed on the touch panel 105. The detection of the operation corresponding to the user interface is detection of an event caused by physical contact with the user interface displayed on the touch panel. The physical contact with the user interface means that a tangible object such as a finger or a touch pen comes into contact with a part of the touch panel corresponding to a display region of the user interface. Examples of detected operation include the start of the operation (occurrence of physical contact with the user interface), the end of the operation (the end of physical contact with the user interface), and details of the operation between the start and end of the operation (a change in a position of physical contact or a passage of time on the touch panel). However, the detected operation is not limited thereto. Every time the detection unit 12 detects specific operation, the detection unit 12 outputs a detection signal indicating the operated user interface and its operation to the instruction unit 13.

The instruction unit 13 is a functional element configured to transmit an instruction signal according to the operation detected by the detection unit 12 to the wireless power transfer system 90. In the present embodiment, the instruction unit 13 changes a timing at which the instruction signal is transmitted in accordance with the operated user interface. Specifically, if the second user interface (the charging stop button) is operated, the instruction unit 13 immediately generates and transmits a second instruction signal for stopping the wireless power transfer system 90 (hereinafter, referred to as a "stop signal"). On the other hand, if the first user interface (the activation icon or the charging start button) is operated, the instruction unit 13 generates and transmits a first instruction signal for actuating the wireless power transfer system 90 (hereinafter referred to as a "start signal") after executing a predetermined process without immediately generating and transmitting the start signal. As a result, a first time interval from the detection of the start of the operation of the first user interface until the transmission of the start signal to the wireless power transfer system 90 is longer than a second time interval from the detection of the start of the operation of the second user interface until the transmission of the stop signal to the wireless power transfer system 90.

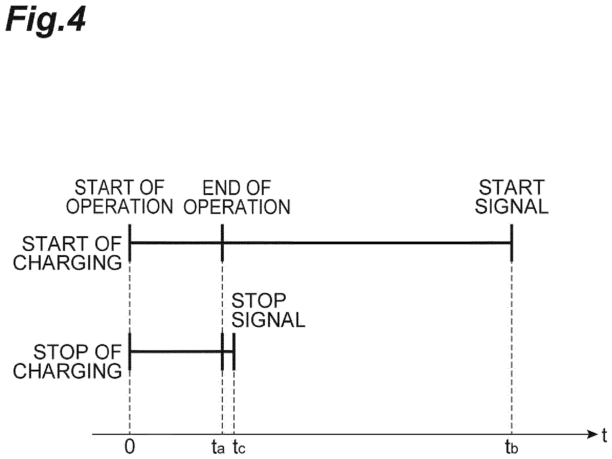

A specific technique for making the first time interval longer than the second time interval is not limited. Various techniques will be described with reference to FIGS. 4 to 11. FIGS. 4 to 11 are diagrams illustrating the operation of the electronic device (the mobile terminal 10) and illustrating a method for operating the target system according to the present embodiment. FIGS. 4 to 11 illustrate a process after the display control unit 11 displays the activation icon, the charging start button, or the charging stop button on the touch panel 105 (that is, after the display control step).

### [Waiting process]

The instruction unit 13 may wait for a predetermined time before transmitting the start signal. FIG. 4 is a diagram illustrating that process. Operation methods and behavior of the charging start button and the charging stop button on the touch panel 105 are the same. For example, the user can actuate the wireless power transfer system 90 by tapping the charging start button, and stop the wireless power transfer system 90 by tapping the charging stop button. When a time point at which the start of the operation is detected is designated as a reference (t=0), a time point tₐ at which the end of the operation is detected is the same between the charging start button and the charging stop button. However, when the charging start button is operated, the instruction unit 13 outputs the start signal at a time point t_{b} after waiting for a predetermined time from the end time point of the operation (after waiting for the predetermined time from the end time point of the operation is executed). On the other hand, when the charging stop button is operated, the instruction unit 13 does not execute such waiting and outputs the stop signal at the time point t_{c} immediately after the time point tₐ. Therefore, t_{b}>t_{c}.

The display control unit 11 can display the charging stop button on the touch panel 105 while waiting according to the operation of the charging start button is executed (that is, from the time point tₐ to the time point t_{b}). If the charging stop button is operated before the start signal is output (before the time point t_{b}), no start signal is output.

Also, while waiting according to the operation of the charging start button is executed (that is, between the time point tₐ and the time point t_{b}), the display control unit 11 may display, on the touch panel 105, a message indicating that the wireless power transfer system 90 is instructed to perform the start of actuation. The message may be represented by at least one of a character string and a figure. This message is for informing the user that the mobile terminal 10 has responded to the user operation.

### [Design of user interface]

The charging start button and the charging stop button may be designed such that the first time interval is longer than the second time interval. The control of the instruction unit 13 for both the charging start button and the charging stop button is the same. However, because the time interval from the detection of the start of operation until the detection of the end of operation is different between these two buttons, the first time interval is consequently longer than the second time interval.

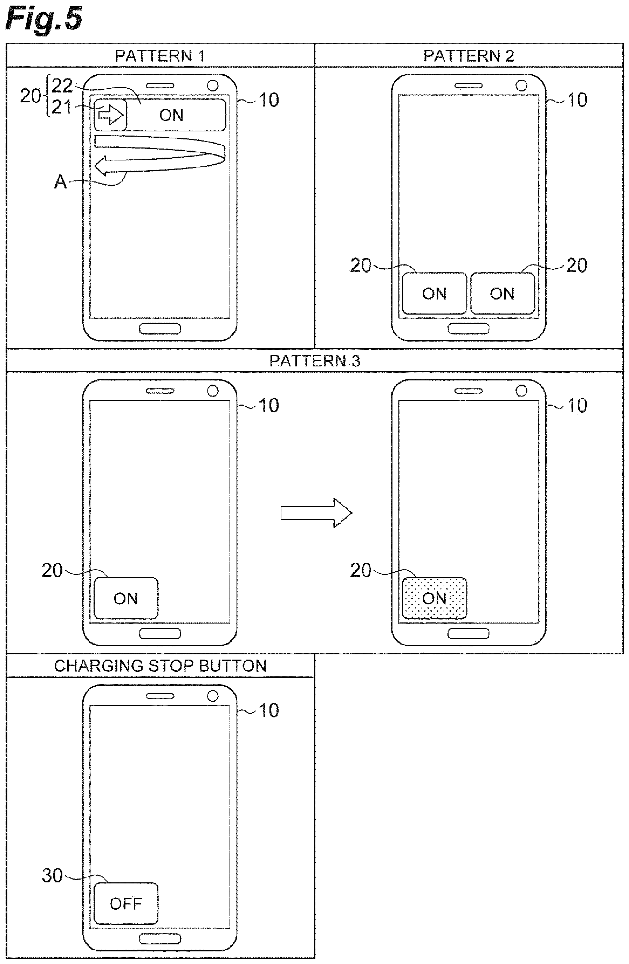

FIG. 5 illustrates an example of an interface requiring a time before the start of charging. In FIG. 5, the charging start button 20 is displayed as "ON" and the charging stop button 30 is displayed as "OFF." The charging stop button 30 receives normal tap operation. On the other hand, with respect to the charging start button 20, a technique of move a button 21 back and forth within a slide region 22 by slide operation (see an arrow A) 1 may be used, as indicated by the pattern. Alternatively, a technique in which it is necessary to sequentially press a plurality of (for example, two) buttons one by one may be used, as indicated by the pattern 2. Alternatively, a technique in which it is necessary to press one button a plurality of times (for example, twice) may be used, as indicated by a pattern 3 (shading indicates schematically that additional pressing is necessary). The patterns illustrated in FIG. 5 are merely examples and various modifications are conceivable with respect to the display and control of the interface. For example, regarding the pattern 1, the slide region may be designed such that the charging start button slides in an upward-downward direction or an oblique direction instead of a left-right direction. Regarding the pattern 2, two charging start buttons may be arranged vertically or diagonally. Also, regarding the pattern 3, an initial display position of the charging start button and a display position after being pressed once may be different.

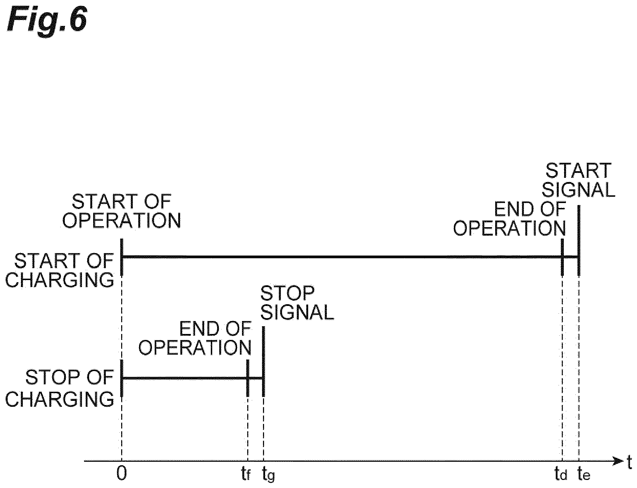

In this manner, a specific design of an interface requiring a time before operation for a start of charging is not limited. In any case, as illustrated in FIG. 6, assuming that a time point at which the start of operation is detected is a reference (t=0), a time point t_{d} at which the end of operation of the charging start button is detected is later than a time point t_{f} at which the end of operation of the charging stop button is detected. In response thereto, a time point tₑ at which the instruction unit 13 transmits the start signal is later than a time point t_{g} at which the instruction unit 13 transmits the stop signal. That is, tₑ>t_{g}. The user can cancel the start of charging by stopping the operation while operating the charging start button (that is, before the time point t_{d} is reached).

### [Determination based on signal intensity]

The instruction unit 13 may transmit the start signal only when a signal intensity of short-range wireless communication between the mobile terminal 10 and the wireless power transfer system 90 is less than or equal to a predetermined threshold. This is intended to allow charging to be started only when the user having the mobile terminal 10 is away from the wireless power transfer system 90 to a certain extent. A communication scheme in which the mobile terminal 10 transmits the instruction signal to the power transmitter 91 is different from short-range wireless communication. Although a standard of the short-range wireless communication used between the mobile terminal 10 and the wireless power transfer system 90 may be arbitrarily determined, Bluetooth (registered trademark) and ZigBee (registered trademark) can be included as examples thereof. A device in the wireless power transfer system 90 configured to communicate with the mobile terminal 10 for such processing is not limited. For example, the instruction unit 13 may measure the signal intensity between the mobile terminal 10 and the movable object V (the movable object V including the power receiver 92 may be regarded as a part of the wireless power transfer system 90). Alternatively, the instruction unit 13 may measure the signal intensity between the mobile terminal 10 and the power transmitter 91.

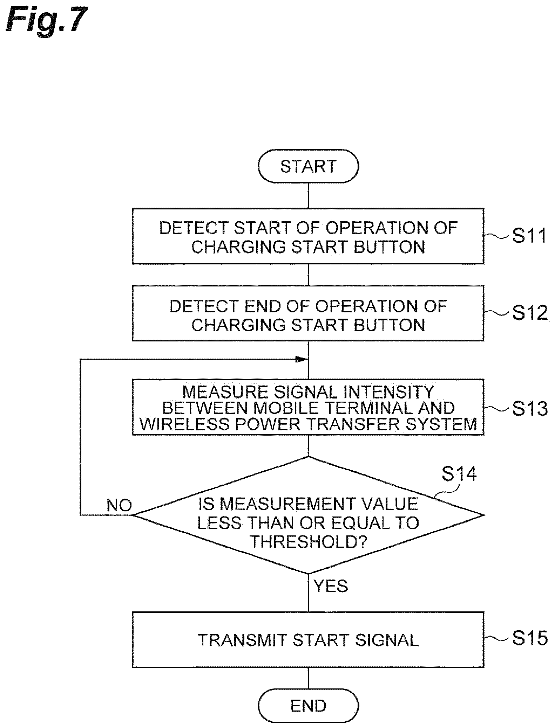

FIG. 7 illustrates a process of determining whether or not to transmit the start signal based on the signal intensity. First, the detection unit 12 detects a start of operation of the charging start button (step S11, detection step) and detects an end of the operation (step S12, detection step). Subsequently, the instruction unit 13 measures the signal intensity of the short-range wireless communication from the wireless power transfer system 90 received by the communication control unit 104 (step S13). Then, when a measurement value is less than or equal to the threshold (YES in step S14), the instruction unit 13 transmits the start signal (step S15, instruction step). On the other hand, if the measurement value is greater than the threshold (NO in step S14), the instruction unit 13 executes the measurement and determination of the signal intensity again. In parallel with the processing of steps S13 and S14 by the instruction unit 13, the display control unit 11 may display, on the touch panel 105, a message for prompting the user to move away from the wireless power transfer system 90 or the movable object V. The threshold used in such processing may be set arbitrarily. For example, when the threshold is set to 0, the instruction unit 13 transmits the start signal only when the mobile terminal 10 cannot communicate with the wireless power transfer system 90 via short-range wireless communication.

The display control unit 11 can display the charging stop button on the touch panel 105 until the measurement value becomes less than or equal to the threshold. When the charging stop button is operated during that time, no start signal is output. In addition to or in place of this processing, the instruction unit 13 may cancel the start of charging automatically or in response to a user's instruction when the measured value is greater than the threshold (NO in step S14) for a predetermined time or more.

### [Use of camera]

The instruction unit 13 may transmit the start signal only when the mobile terminal 10 acquires an image with the camera 106. This is intended to start charging only after the user having the mobile terminal 10 checks the vicinity of the wireless power transfer system 90 or the movable object V.

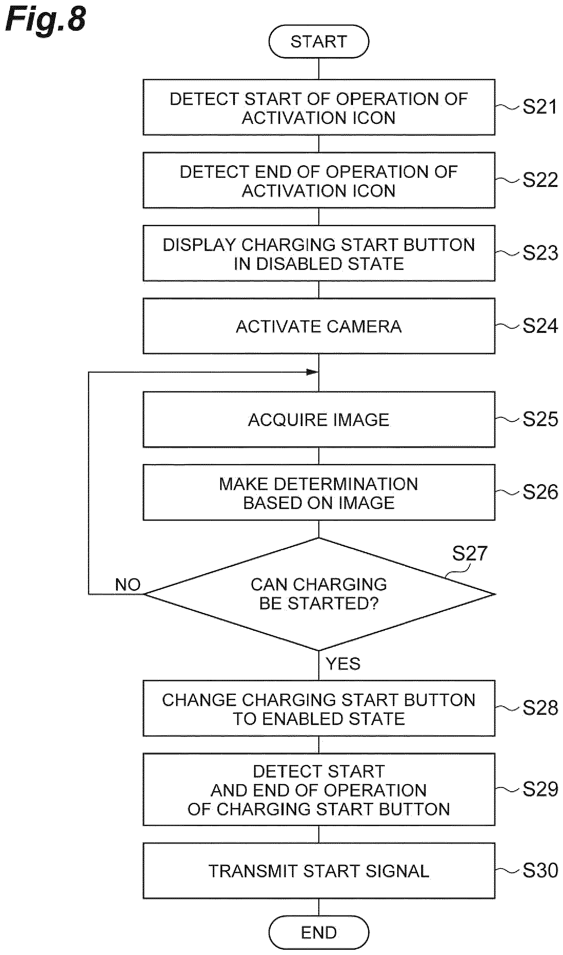

FIG. 8 illustrates a process of transmitting a start signal on the premise of image acquisition. First, the detection unit 12 detects the start of operation of the activation icon (step S21, detection step), and further detects the end of the operation (step S22, detection step). Subsequently, the instruction unit 13 instructs the display control unit 11 to display the charging start button in a disabled state. In response thereto, the display control unit 11 displays the charging start button on the touch panel 105 in the disabled state (step S23). Therefore, at this stage, the user cannot operate the charging start button.

Further, the instruction unit 13 activates the camera 106 (step S24) and acquires an image (a moving image or a still image) (step S25). Then, the instruction unit 13 makes a determination based on the image (step S26) and determines whether or not charging can be started. For example, the instruction unit 13 compares the acquired image with a reference pattern stored in advance (for example, a photo of the whole of the movable object V possessed by the user). Then, the instruction unit 13 determines that charging can be started when both the images match, and determines that charging cannot be started if the images do not match. Alternatively, the instruction unit 13 compares the image with a predetermined reference pattern (for example, a pattern corresponding to a human or an extraneous material). If the image does not include the reference pattern, the instruction unit 13 determines that the charging can be started. If the image includes the reference pattern, the instruction unit 13 determines that charging cannot be started.

If it is determined that charging can be started (YES in step S27), the instruction unit 13 changes the charging start button to an enabled state (step S28). This allows the user to operate the charging start button. Thereafter, when the detection unit 12 detects the start and end of operation of the charging start button (step S29), the instruction unit 13 outputs a start signal (step S30, instruction step). On the other hand, if it is determined that charging cannot be started (NO in step S27), the instruction unit executes acquisition and determination of images again (steps S25 to S27).

In the process illustrated in FIG. 8, the instruction unit 13 may omit the determination based on the image (steps S26 and S27) and may change the charging start button to the enabled state in response to acquisition of the image from the camera 106.

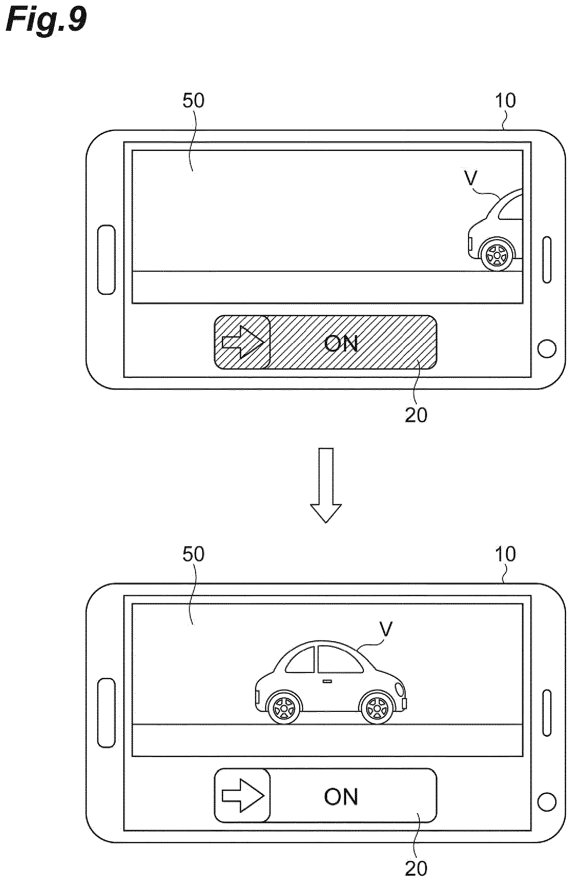

FIG. 9 illustrates an example of image acquisition, which is a condition of transmission of the start signal illustrated in FIG. 8. In FIG. 9, the charging start button 20 is displayed as "ON." A reference pattern for comparing with the image is an entire image of the movable object V. In this case, the detection unit 12 maintains the charging start button 20 in the disabled state until the image 50 obtained from the camera 106 includes the entire movable object V (see an upper side of FIG. 9). Accordingly, the user needs to direct the camera 106 towards the movable object V. Thereafter, when the camera 106 shows the whole of the movable object V, the detection unit 12 determines that the image 50 and the pattern match, and changes the charging start button 20 to the enabled state (see a lower side of FIG. 9).

The display control unit 11 can display the charging stop button on the touch panel 105 until the charging start button is enabled. When the charging stop button is operated during that time, no start signal is output. In addition to or in place of this processing, when the disabled state of the charging start button continues for a predetermined time or more even after the camera 106 is activated, the instruction unit 13 may cancel the start of charging automatically or in response to a user's instruction.

The instruction unit 13 may transmit a start signal only when the mobile terminal 10 receives (acquires) an image from an external camera (not illustrated). This processing is also intended to start charging only after the user having the mobile terminal 10 checks the vicinity of the wireless power transfer system 90 or the movable object V. The "external camera" is a camera that is not provided in the mobile terminal 10 (the electronic device) or a camera that is provided in a device different from the mobile terminal 10 (the electronic device). The external camera is not limited, and may be, for example, a monitoring camera installed in the charging station or a camera provided in any computer different from the mobile terminal 10.

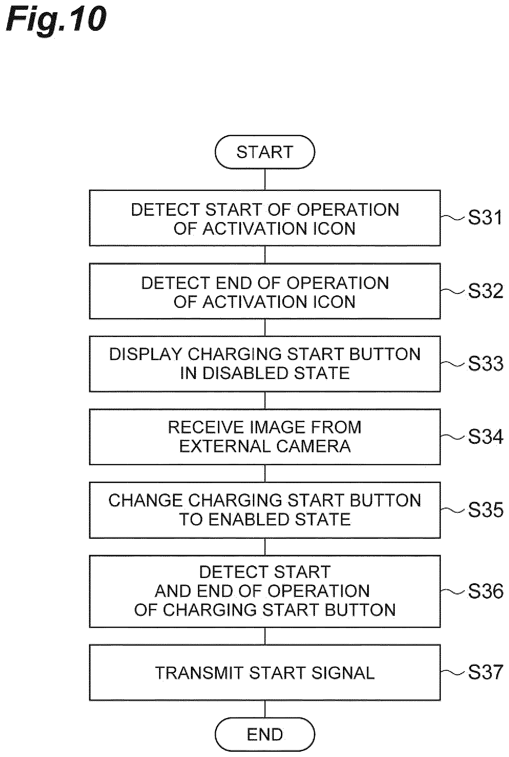

FIG. 10 illustrates a process of transmitting a start signal on the premise of image reception. First, the detection unit 12 detects the start of operation of the activation icon (step S31, detection step), and further detects the end of the operation (step S32, detection step). Subsequently, the instruction unit 13 instructs the display control unit 11 to display the charging start button in a disabled state. In response thereto, the display control unit 11 displays the charging start button on the touch panel 105 in the disabled state (step S33). Therefore, at this stage, the user cannot operate the charging start button. Steps S31 to S33 are the same as the above-described steps S21 to S23.

Subsequently, the instruction unit 13 receives an image (a moving image or a still image) from the external camera (step S34). The instruction unit 13 transmits an image request signal to a predetermined external camera or another device and receives an image sent from the external camera or the other device in accordance with the signal. In response to the reception, the instruction unit 13 changes the charging start button to the enabled state (step S35). This allows the user to operate the charging start button. Thereafter, when the detection unit 12 detects the start and end of the operation of the charging start button (step S36), the instruction unit 13 outputs a start signal (step S37, instruction step).

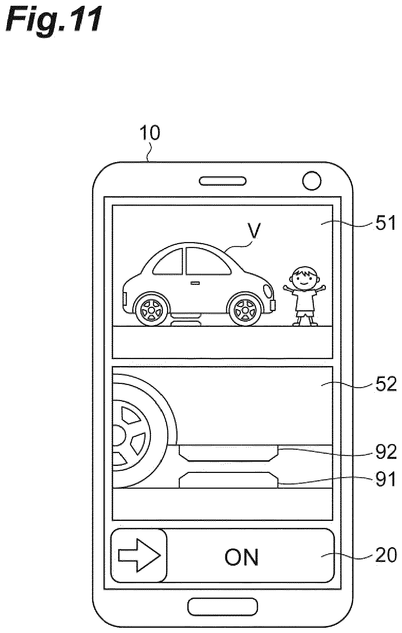

FIG. 11 illustrates an example of reception (acquisition) of an image, which is a condition of transmission of the start signal illustrated in FIG. 10. In FIG. 11, the charging start button 20 is displayed as "ON." In this example, the instruction unit 13 receives at least one of a bird's eye view image 51 showing the vicinity of the movable object V and an enlarged image 52 showing the power transmitter 91 and the power receiver 92 (FIG. 11 illustrates an example in which the two images 51 and 52 are received). The display control unit 11 displays these images on the touch panel 105. The display control unit 11 places the charging start button 20 in an enabled state in response to reception (acquisition) of such an image. The user checks the image and operates the charging start button 20.

The display control unit 11 can display the charging stop button on the touch panel 105 until the charging start button is enabled. When the charging stop button is operated during that time, no start signal is output. In addition to or in place of this processing, the instruction unit 13 may cancel the start of charging automatically or in response to a user's instruction when a state in which no image is received from the external camera continues for a predetermined time or more.

In the above-described process described with reference to FIGS. 8 to 11, the activation icon corresponds to the first user interface.

### [Charging stop button]

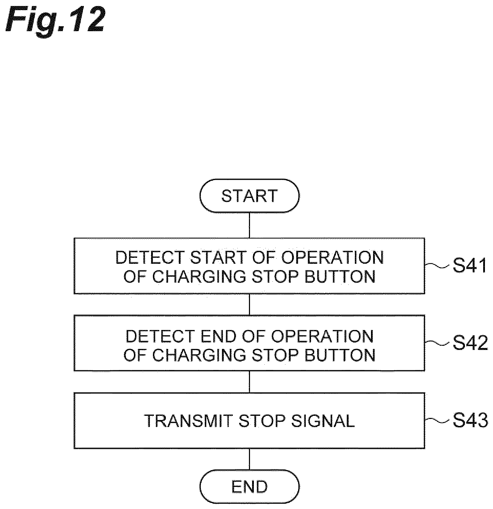

On the other hand, FIG. 12 illustrates a process when the charging stop button 30 is operated. The detection unit 12 detects the start of operation of the charging stop button (step S41, detection step), and detects the end of the operation (step S42, detection step). The instruction unit 13 transmits a stop signal in response to this detection (step S43, instruction step). As is apparent from comparison between FIGS. 7 and 12, comparison between FIGS. 8 and 12, or comparison between FIGS. 10 and 12, because a process not to be executed when the stop signal is transmitted is executed before the start signal is transmitted, the first time interval is longer than the second time interval.

The design of the above-described user interface may be implemented in combination with the waiting process, the determination based on the signal intensity, or the use of the camera. If the pattern 2 or 3 illustrated in FIG. 5 is combined with the use of the camera, the process illustrated in FIG. 8 (or FIG. 10) is as follows. That is, the display control unit 11 initially displays the charging start button in the enabled state. Thereafter, when the detection unit 12 detects first operation of the charging start button in steps S21 and S22 (or steps S31 and S32), the display control unit 11 temporarily sets the charging start button to the disabled state in step S23 (or step S33). Thereafter, when the process proceeds to step S28 (or step S35), the display control unit 11 returns the charging start button to the enabled state. In this series of processes, the charging start button corresponds to the first interface.

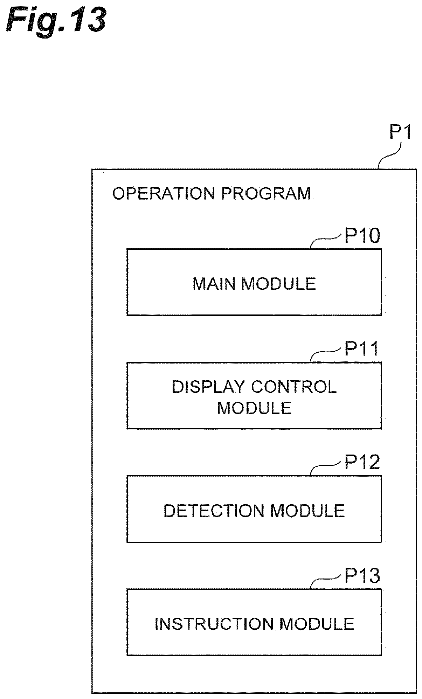

Next, with reference to FIG. 13, an operation program PI for implementing the mobile terminal 10 will be described. The operation program PI is at least a part of the operation application.

The operation program PI includes a main module P10, a display control module P11, a detection module P12, and an instruction module P13. The main module P10 is a part configured to generally control the operation of the wireless power transfer system 90 (the target system). The functions implemented by executing the display control module P11, the detection module P12, and the instruction module P13 are the same as the functions of the display control unit 11, the detection unit 12, and the instruction unit 13 described above.

The operation program PI may be provided after being fixedly recorded on a tangible recording medium such as a CD-ROM, a DVD-ROM, a semiconductor memory or the like. Alternatively, the operation program PI may be provided via a communication network as a data signal superimposed on a carrier wave.

As described above, an electronic device according to an aspect of the present disclosure is an electronic device having a touch panel, the electronic device including: a display control unit configured to display a first user interface related to start of actuation of a target system different from the electronic device or a second user interface related to a function other than the start of actuation of the target system on the touch panel; a detection unit configured to detect an operation of the first user interface or the second user interface on the touch panel; and an instruction unit configured to transmit an instruction signal according to the operation detected by the detection unit to the target system, wherein a first time interval from when the detection unit detects a start of a first operation of the first user interface until when the instruction unit transmits a first instruction signal for the start of actuation to the target system in accordance with the first operation is longer than a second time interval from when the detection unit detects a start of a second operation of the second user interface until when the instruction unit transmits a second instruction signal for the other function to the target system in accordance with the second operation.

A operation method for a target system according to an aspect of the present disclosure is a method for operating a target system different from an electronic device including a touch panel, the method being executed by the electronic device, the operation method including: a display control step of displaying a first user interface related to start of actuation of the target system different from the electronic device or a second user interface related to a function other than the start of actuation of the target system on the touch panel; a detection step of detecting an operation of the first user interface or the second user interface on the touch panel; and an instruction step of transmitting an instruction signal according to the operation detected in the detection step to the target system, wherein a first time interval from when a start of a first operation of the first user interface is detected in the detection step until when a first instruction signal for the start of actuation is transmitted to the target system in accordance with the first operation in the instruction step is longer than a second time interval from when a start of a second operation of the second user interface is detected in the detection step until when a second instruction signal for the other function is transmitted to the target system in accordance with the second operation in the instruction step.

An operation program according to an aspect of the present disclosure is an operation program for causing an electronic device including a touch panel to execute: a display control step of displaying a first user interface related to start of actuation of a target system different from the electronic device or a second user interface related to a function other than the start of actuation of the target system on the touch panel; a detection step of detecting an operation of the first user interface or the second user interface on the touch panel; and an instruction step of transmitting an instruction signal according to the operation detected in the detection step to the target system, wherein a first time interval from when a start of a first operation of the first user interface is detected in the detection step until when a first instruction signal for the start of actuation is transmitted to the target system in accordance with the first operation in the instruction step is longer than a second time interval from when a start of a second operation of the second user interface is detected in the detection step until when a second instruction signal for the other function is transmitted to the target system in accordance with the second operation in the instruction step.

In this aspect, a time interval from when an operation related to the start of actuation of the target system starts until when the electronic device instructs the target system to start actuation (a first time interval) is longer than a time interval until the electronic device instructs the target system to perform a function other than the start of actuation (a second time interval). That is, in the case of the start of actuation of the target system, the time interval from when the user starts the operation on the electronic device until when the electronic device actually instructs the target system to start actuation is longer than when the electronic device instructs the target system to perform the other function. By providing such an intentional time lag in the case of the start of actuation of the target system, it is possible to give the user an opportunity to cancel the start of actuation. Because the user can cancel the start of actuation of the target system (other system) during a time difference, erroneous operation can be prevented.

When controlling a system different from the electronic device to be operated by the user, considerations different from the control of the electronic device itself are necessary. As an example, if the electronic device is the mobile terminal described in the above embodiment, the user can easily operate the user interface on the touch panel. Alternatively, the user may operate the user interface unintentionally. These can lead to an operation of the target system unintended by the user. An aspect of the present disclosure is to prevent erroneous operation on an electronic device and a target system by designing a timing at which an instruction signal is transmitted to the target system as described above.

In the electronic device according to another aspect, the display control unit may display the first user interface and the second user interface on the touch panel such that a time interval from when the detection unit detects a start of the first operation until when the detection unit detects an end of the first operation is longer than a time interval from when the detection unit detects a start of the second operation until when the detection unit detects an end of the second operation. By designing the user interface such that the time interval of operation for the start of actuation becomes long, it is possible to provide the user with an opportunity to cancel an ongoing operation.

In the electronic device according to another aspect, the instruction unit may transmit the first instruction signal after waiting for the predetermined time from the end time point of the first operation, and transmit the second instruction signal without executing waiting if the second operation has ended. By providing a time lag between the end of the operation for the start of actuation and the transmission of the instruction signal, it is possible to give the user the opportunity to cancel the start of actuation.

In the electronic device according to another aspect, the display control unit may display, on the touch panel, a message indicating an instruction of the start of actuation has been issued to the target system, while waiting according to the first operation is executed. It is possible to inform the user that the electronic device has responded to the operation of the user by displaying that the instruction has been issued to the target system on the touch panel from the stage in which the instruction signal is not actually transmitted to the target system. This contributes to giving the user a relief that the electronic device has responded to the operation.

In the electronic device according to another aspect, the instruction unit may measure the signal intensity of the wireless communication with the target system in accordance with the end of the first operation and transmit the first instruction signal if the signal intensity is less than or equal to a predetermined threshold. The fact that the signal intensity is less than or equal to the predetermined threshold means that the electronic device (the user) is separated from the target system by a predetermined distance or more. According to this mechanism, it is possible to cause the target system to be operated after the user moves away from the target system.

In the electronic device according to another aspect, the instruction unit may acquire an image related to the target system from the camera in response to the end of the first operation and transmit the first instruction signal after the image is acquired. By giving the user an opportunity to check the image related to the target system, it is possible to direct the user's attention to the target system as an operation target. For example, the user can check whether or not an extraneous material or a human is present around the wireless power transfer system.

The electronic device according to another aspect may further include a camera, and the instruction unit may compare the image with a predetermined pattern and transmit the first instruction signal after a comparison result satisfies a predetermined condition. According to this mechanism, it is possible to cause the target system to be operated only under a specific condition.

In the electronic device according to another aspect, the camera may be an external camera, and the instruction unit may transmit the first instruction signal in response to acquisition of the image from the external camera. By intentionally acquiring an image from an external camera different from the electronic device, it is possible to gain time in which the start of operation can be canceled.

In the electronic device according to another aspect, the target system may be a wireless power transfer system including a power transmitter capable of wirelessly transmitting power to the power receiver of the movable object. In this case, it is possible to prevent erroneous operation of the electronic device for operating the wireless power transfer system.

The present disclosure has been described above in detail based on embodiments thereof. However, the present disclosure is not limited to the above embodiments. Various modifications are possible within the scope of the present disclosure without departing from the subject matter thereof.

A processing procedure of a method for operating a target system executed by at least one processor is not limited to the example in the above embodiment. For example, the electronic device may omit some of the above-described steps (processing) or may execute the steps in another order. Also, any two or more of the above-described steps may be combined, or some of the steps may be modified or deleted. Alternatively, the electronic device may execute other steps in addition to the above-described steps.

When magnitude relationships of two numerical values are compared within an electronic device, either one of two criteria "greater than and equal to" and "greater than" may be used and either one of two criteria of "less than or equal" and "less than" can be used. Selection of such criteria does not change the technical significance of the process of comparing the magnitude relationships of the two numerical values.

### Industrial Applicability

According to an aspect of the present disclosure, it is possible to prevent erroneous operation on an electronic device for operating another system.

### Reference Signs List

- 10: Mobile terminal (electronic device)
- 90: Wireless power transfer system (target system)
- 105: Touch panel
- 106: Camera
- 11: Display control unit
- 12: Detection unit
- 13: Instruction unit
- 20: Charging start button (first user interface)
- 30: Charging stop button (second user interface)
- P1: Operation program
- P10: Main module
- P11: Display control module
- P12: Detection module
- P13: Instruction module

## Claims

1. An electronic device (10) having a touch panel (105), the electronic device (10) comprising:
a display control unit (11) configured to display on the touch panel (105) a user interface related to start of actuation of a target system (90) different from the electronic device (10);
a detection unit (12) configured to detect an operation of the user interface on the touch panel (105); and
an instruction unit (13) configured to transmit an instruction signal according to the operation detected by the detection unit (12) to the target system (90), **characterized in that**
the instruction unit (13) measures a signal intensity of wireless communication with the target system (90) in accordance with an end of the operation and transmits the instruction signal if the signal intensity is less than or equal to a predetermined threshold.

2. An electronic device (10) having a touch panel (105), the electronic device (10) comprising:
a display control unit (11) configured to display on the touch panel (105) a user interface related to start of actuation of a target system (90) different from the electronic device (10);
a detection unit (12) configured to detect an operation of the user interface on the touch panel (105); and
an instruction unit (13) configured to transmit an instruction signal according to the operation detected by the detection unit (12) to the target system (90), **characterized in that**
the instruction unit (13) acquires an image related to the target system (90) from a camera (106) in accordance with an end of the operation, compares the image with a predetermined pattern, and transmits the instruction signal after a comparison result satisfies a predetermined condition.

3. The electronic device (10) according to claim 2, further comprising:
the camera (106).

4. The electronic device (10) according to claim 2,
wherein the camera (106) is an external camera (106), and
wherein the instruction unit (13) transmits the instruction signal in response to acquisition of the image from the external camera (106).

5. The electronic device (10) according to any one of claims 1 to 4, wherein the target system (90) is a wireless power transfer system including a power transmitter capable of wirelessly transmitting electric power to a power receiver of a movable object.

6. A method for operating a target system (90) different from an electronic device (10) that includes a touch panel (105), the method being executed by the electronic device (10), and comprising:
a display control step of displaying on the touch panel (105) a user interface related to start of actuation of the target system (90);
a detection step (S11, S12) of detecting an operation of the user interface on the touch panel (105); and
an instruction step of transmitting an instruction signal according to the operation detected in the detection step to the target system (90), **characterized in that**
the instruction step includes measuring (S13) a signal intensity of wireless communication with the target system (90) in accordance with an end of the operation and transmitting (S15) the instruction signal if the signal intensity is less than or equal to a predetermined threshold.

7. An operation program comprising instructions to cause an electronic device (10) including a touch panel (105) to execute:
a display control step of displaying on the touch panel (105) a user interface related to start of actuation of a target system (90) different from the electronic device (10);
a detection step (S11, S12) of detecting an operation of the user interface on the touch panel (105); and
an instruction step of transmitting an instruction signal according to the operation detected in the detection step to the target system (90), **characterized in that**
the instruction step includes measuring (S13) a signal intensity of wireless communication with the target system (90) in accordance with an end of the operation and transmitting (S15) the instruction signal if the signal intensity is less than or equal to a predetermined threshold.

8. A method for operating a target system (90) different from an electronic device (10) that includes a touch panel (105), the method being executed by the electronic device (10), and comprising:
a display control step of displaying on the touch panel (105) a user interface related to start of actuation of the target system (90);
a detection step (S21, S22) of detecting an operation of the user interface on the touch panel (105); and
an instruction step of transmitting an instruction signal according to the operation detected in the detection step to the target system (90), **characterized in that**
the instruction step includes acquiring (S25) an image related to the target system (90) from a camera (106) in accordance with an end of the operation, comparing (S26) the image with a predetermined pattern, and transmitting (S30) the instruction signal after a comparison result satisfies a predetermined condition (S27).

9. An operation program comprising instructions to cause an electronic device (10) including a touch panel (105) to execute:
a display control step of displaying on the touch panel (105) a user interface related to start of actuation of a target system (90) different from the electronic device (10);
a detection step (S21, S22) of detecting an operation of the user interface on the touch panel (105); and
an instruction step of transmitting an instruction signal according to the operation detected in the detection step to the target system (90), **characterized in that**
the instruction step includes acquiring (S25) an image related to the target system (90) from a camera (106) in accordance with an end of the operation, comparing (S26) the image with a predetermined pattern, and transmitting (S30) the instruction signal after a comparison result satisfies a predetermined condition (S27).

## Patentansprüche

1. Elektronische Vorrichtung (10) mit einem Berührungsbildschirm (105), wobei die elektronische Vorrichtung (10) umfasst:
eine Anzeigesteuerungseinheit (11), die dafür konfiguriert ist, auf dem Berührungsbildschirm (105) eine Benutzerschnittstelle anzuzeigen, die sich auf den Beginn einer Betätigung eines Zielsystems (90) bezieht, das von der elektronischen Vorrichtung (10) verschieden ist;
eine Ermittlungseinheit (12), die dafür konfiguriert ist, eine Operation der Benutzerschnittstelle auf dem Berührungsbildschirm (105) zu ermitteln; und
eine Anweisungseinheit (13), die dafür konfiguriert ist, ein Anweisungssignal gemäß der durch die Ermittlungseinheit (12) ermittelten Operation zum Zielsystem (90) zu übertragen, **dadurch gekennzeichnet, dass**
die Anweisungseinheit (13) eine Signalintensität einer drahtlosen Kommunikation mit dem Zielsystem (90) in Übereinstimmung mit einem Ende der Operation misst und das Anweisungssignal überträgt, wenn die Signalintensität kleiner oder gleich einem vorbestimmten Schwellenwert ist.

2. Elektronische Vorrichtung (10) mit einem Berührungsbildschirm (105), wobei die elektronische Vorrichtung (10) umfasst:
eine Anzeigesteuerungseinheit (11), die dafür konfiguriert ist, auf dem Berührungsbildschirm (105) eine Benutzerschnittstelle anzuzeigen, die sich auf den Beginn einer Betätigung eines Zielsystems (90) bezieht, das von der elektronischen Vorrichtung (10) verschieden ist;
eine Ermittlungseinheit (12), die dafür konfiguriert ist, eine Operation der Benutzerschnittstelle auf dem Berührungsbildschirm (105) zu ermitteln; und
eine Anweisungseinheit (13), die dafür konfiguriert ist, ein Anweisungssignal gemäß der durch die Ermittlungseinheit (12) ermittelten Operation zum Zielsystem (90) zu übertragen, **dadurch gekennzeichnet, dass**
die Anweisungseinheit (13) ein auf das Zielsystem (90) bezogenes Bild von einer Kamera (106) in Übereinstimmung mit einem Ende der Operation erlangt, das Bild mit einem vorbestimmten Muster vergleicht und das Anweisungssignal überträgt, nachdem ein Vergleichsergebnis eine vorbestimmte Bedingung erfüllt.

3. Elektronische Vorrichtung (10) nach Anspruch 2, ferner umfassend:
die Kamera (106).

4. Elektronische Vorrichtung (10) nach Anspruch 2,
worin die Kamera (106) eine externe Kamera (106) ist, und
worin die Anweisungseinheit (13) das Anweisungssignal als Reaktion auf die Erlangung des Bildes von der externen Kamera (106) überträgt.

5. Elektronische Vorrichtung (10) nach einem der Ansprüche 1 bis 4, worin das Zielsystem (90) ein drahtloses Leistungsübertragungssystem ist, das einen Leistungssender einschließt, der zum drahtlosen Übertragen elektrischer Leistung zu einem Leistungsempfänger eines beweglichen Objekts imstande ist.

6. Verfahren zum Betreiben eines Zielsystems (90), das von einer elektronischen Vorrichtung (10), die einen Berührungsbildschirm (105) einschließt, verschieden ist, wobei das Verfahren durch die elektronische Vorrichtung (10) ausgeführt wird und umfasst:
einen Anzeigesteuerungsschritt zum Anzeigen einer Benutzerschnittstelle, die sich auf den Beginn der Betätigung des Zielsystems (90) bezieht, auf dem Berührungsbildschirm (105);
einen Ermittlungsschritt (S11, S12) zum Ermitteln einer Operation der Benutzerschnittstelle auf dem Berührungsbildschirm (105); und
einen Anweisungsschritt zum Übertragen eines Anweisungssignals gemäß der im Ermittlungsschritt ermittelten Operation zum Zielsystem (90), **dadurch gekennzeichnet, dass**
der Anweisungsschritt einschließt: Messen (S13) einer Signalintensität der drahtlosen Kommunikation mit dem Zielsystem (90) in Übereinstimmung mit einem Ende der Operation und Übertragen (S15) des Anweisungssignals, wenn die Signalintensität kleiner oder gleich einem vorbestimmten Schwellenwert ist.

7. Betriebsprogramm, Anweisungen umfassend, um zu bewirken, dass eine elektronische Vorrichtung (10), die einen Berührungsbildschirm (105) einschließt, Folgendes ausführt:
einen Anzeigesteuerungsschritt zum Anzeigen einer Benutzerschnittstelle auf dem Berührungsbildschirm (105), die sich auf den Beginn der Betätigung eines Zielsystems (90) bezieht, das von der elektronischen Vorrichtung (10) verschieden ist;
einen Ermittlungsschritt (S11, S12) zum Ermitteln einer Operation der Benutzerschnittstelle auf dem Berührungsbildschirm (105); und
einen Anweisungsschritt zum Übertragen eines Anweisungssignals gemäß der im Ermittlungsschritt ermittelten Operation zum Zielsystem (90), **dadurch gekennzeichnet, dass**
der Anweisungsschritt einschließt: Messen (S13) einer Signalintensität der drahtlosen Kommunikation mit dem Zielsystem (90) in Übereinstimmung mit einem Ende der Operation und Übertragen (S15) des Anweisungssignals, wenn die Signalintensität kleiner oder gleich einem vorbestimmten Schwellenwert ist.

8. Verfahren zum Betreiben eines Zielsystems (90), das von einer elektronischen Vorrichtung (10), die einen Berührungsbildschirm (105) einschließt, verschieden ist, wobei das Verfahren durch die elektronische Vorrichtung (10) ausgeführt wird und umfasst:
einen Anzeigesteuerungsschritt zum Anzeigen einer Benutzerschnittstelle, die sich auf den Beginn der Betätigung des Zielsystems (90) bezieht, auf dem Berührungsbildschirm (105);
einen Ermittlungsschritt (S11, S12) zum Ermitteln einer Operation der Benutzerschnittstelle auf dem Berührungsbildschirm (105); und
einen Anweisungsschritt zum Übertragen eines Anweisungssignals gemäß der im Ermittlungsschritt ermittelten Operation zum Zielsystem (90), **dadurch gekennzeichnet, dass**
der Anweisungsschritt einschließt: Erlangen (S25) eines auf das Zielsystem (90) bezogenen Bildes von einer Kamera (106) in Übereinstimmung mit einem Ende der Operation, Vergleichen (S26) des Bildes mit einem vorbestimmten Muster und Übertragen (S30) des Anweisungssignals, nachdem ein Vergleichsergebnis eine vorbestimmte Bedingung (S27) erfüllt.

9. Betriebsprogramm, Anweisungen umfassend, um zu bewirken, dass eine elektronische Vorrichtung (10), die einen Berührungsbildschirm (105) einschließt, Folgendes ausführt:
einen Anzeigesteuerungsschritt zum Anzeigen einer Benutzerschnittstelle auf dem Berührungsbildschirm (105), die sich auf den Beginn der Betätigung eines Zielsystems (90) bezieht, das von der elektronischen Vorrichtung (10) verschieden ist;
einen Ermittlungsschritt (S11, S12) zum Ermitteln einer Operation der Benutzerschnittstelle auf dem Berührungsbildschirm (105); und
einen Anweisungsschritt zum Übertragen eines Anweisungssignals gemäß der im Ermittlungsschritt ermittelten Operation zum Zielsystem (90), **dadurch gekennzeichnet, dass**
der Anweisungsschritt einschließt: Erlangen (S25) eines auf das Zielsystem (90) bezogenen Bildes von einer Kamera (106) in Übereinstimmung mit einem Ende der Operation, Vergleichen (S26) des Bildes mit einem vorbestimmten Muster und Übertragen (S30) des Anweisungssignals, nachdem ein Vergleichsergebnis eine vorbestimmte Bedingung (S27) erfüllt.

## Revendications

1. Dispositif électronique (10) comportant un écran tactile (105), le dispositif électronique (10) comprenant :
une unité de commande d'affichage (11) qui est configurée pour afficher sur l'écran tactile (105) une interface utilisateur qui est rapportée au début d'un actionnement d'un système cible (90) qui est différent du dispositif électronique (10) ;
une unité de détection (12) qui est configurée pour détecter une opération de l'interface utilisateur sur l'écran tactile (105) ; et
une unité d'instruction (13) qui est configurée pour émettre un signal d'instruction en fonction de l'opération qui est détectée par l'unité de détection (12) sur le système cible (90), **caractérisé en ce que** :
l'unité d'instruction (13) mesure une intensité de signal d'une communication sans fil avec le système cible (90) en fonction d'une fin de l'opération et émet le signal d'instruction si l'intensité de signal est inférieure ou égale à un seuil prédéterminé.

2. Dispositif électronique (10) comportant un écran tactile (105), le dispositif électronique (10) comprenant :
une unité de commande d'affichage (11) qui est configurée pour afficher sur l'écran tactile (105) une interface utilisateur qui est rapportée au début d'un actionnement d'un système cible (90) qui est différent du dispositif électronique (10) ;
une unité de détection (12) qui est configurée pour détecter une opération de l'interface utilisateur sur l'écran tactile (105) ; et
une unité d'instruction (13) qui est configurée pour émettre un signal d'instruction en fonction de l'opération qui est détectée par l'unité de détection (12) sur le système cible (90), **caractérisé en ce que** :
l'unité d'instruction (13) acquiert une image qui est rapportée au système cible (90) à partir d'une caméra (106) en fonction d'une fin de l'opération, compare l'image avec un motif prédéterminé et émet le signal d'instruction après qu'un résultat de comparaison satisfait une condition prédéterminée.

3. Dispositif électronique (10) selon la revendication 2, comprenant en outre :
la caméra (106).

4. Dispositif électronique (10) selon la revendication 2,
dans lequel la caméra (106) est une caméra externe (106) ; et
dans lequel l'unité d'instruction (13) émet le signal d'instruction en réponse à l'acquisition de l'image à partir de la caméra externe (106).

5. Dispositif électronique (10) selon l'une quelconque des revendications 1 à 4, dans lequel le système cible (90) est un système de transfert d'énergie électrique sans fil qui inclut un émetteur d'énergie électrique qui dispose de la capacité d'émettre sans fil de l'énergie électrique sur un récepteur d'énergie électrique d'un objet mobile.

6. Procédé pour faire fonctionner un système cible (90) qui est différent d'un dispositif électronique (10) qui inclut un écran tactile (105), le procédé étant exécuté par le dispositif électronique (10) et comprenant :
une étape de commande d'affichage qui consiste à afficher sur l'écran tactile (105) une interface utilisateur qui est rapportée à un début d'un actionnement du système cible (90);
une étape de détection (S11, S12) qui consiste à détecter une opération de l'interface utilisateur sur l'écran tactile (105) ; et
une étape d'instruction qui consiste à émettre un signal d'instruction en fonction de l'opération qui est détectée au niveau de l'étape de détection sur le système cible (90), **caractérisé en ce que** :
l'étape d'instruction inclut la mesure (S13) d'une intensité de signal d'une communication sans fil avec le système cible (90) en fonction d'une fin de l'opération et l'émission (S15) du signal d'instruction si l'intensité de signal est inférieure ou égale à un seuil prédéterminé.

7. Programme de fonctionnement comprenant des instructions pour amener un dispositif électronique (10) qui inclut un écran tactile (105) à exécuter :
une étape de commande d'affichage qui consiste à afficher sur l'écran tactile (105) une interface utilisateur qui est rapportée à un début d'un actionnement d'un système cible (90) qui est différent du dispositif électronique (10) ;
une étape de détection (S11, S12) qui consiste à détecter une opération de l'interface utilisateur sur l'écran tactile (105) ; et
une étape d'instruction qui consiste à émettre un signal d'instruction en fonction de l'opération qui est détectée au niveau de l'étape de détection sur le système cible (90), **caractérisé en ce que** :
l'étape d'instruction inclut la mesure (S13) d'une intensité de signal d'une communication sans fil avec le système cible (90) en fonction d'une fin de l'opération et l'émission (S15) du signal d'instruction si l'intensité de signal est inférieure ou égale à un seuil prédéterminé.

8. Procédé pour faire fonctionner un système cible (90) qui est différent d'un dispositif électronique (10) qui inclut un écran tactile (105), le procédé étant exécuté par le dispositif électronique (10) et comprenant :
une étape de commande d'affichage qui consiste à afficher sur l'écran tactile (105) une interface utilisateur qui est rapportée à un début d'un actionnement du système cible (90);
une étape de détection (S21, S22) qui consiste à détecter une opération de l'interface utilisateur sur l'écran tactile (105) ; et
une étape d'instruction qui consiste à émettre un signal d'instruction en fonction de l'opération qui est détectée au niveau de l'étape de détection sur le système cible (90), **caractérisé en ce que** :
l'étape d'instruction inclut l'acquisition (S25) d'une image qui est rapportée au système cible (90) à partir d'une caméra (106) en fonction d'une fin de l'opération, la comparaison (S26) de l'image avec un motif prédéterminé et l'émission (S30) du signal d'instruction après qu'un résultat de comparaison satisfait une condition prédéterminée (S27).

9. Programme de fonctionnement comprenant des instructions pour amener un dispositif électronique (10) qui inclut un écran tactile (105) à exécuter :
une étape de commande d'affichage qui consiste à afficher sur l'écran tactile (105) une interface utilisateur qui est rapportée à un début d'un actionnement d'un système cible (90) qui est différent du dispositif électronique (10) ;
une étape de détection (S21, S22) qui consiste à détecter une opération de l'interface utilisateur sur l'écran tactile (105) ; et
une étape d'instruction qui consiste à émettre un signal d'instruction en fonction de l'opération qui est détectée au niveau de l'étape de détection sur le système cible (90), **caractérisé en ce que** :
l'étape d'instruction inclut l'acquisition (S25) d'une image qui est rapportée au système cible (90) à partir d'une caméra (106) en fonction d'une fin de l'opération, la comparaison (S26) de l'image avec un motif prédéterminé et l'émission (S30) du signal d'instruction après qu'un résultat de comparaison satisfait une condition prédéterminée (S27).
